# EUROPEAN PATENT SPECIFICATION

(11) **EP 2 592 673 B1**
(45) Date of publication and mention of the grant of the patent: **30.04.2014**
(21) Application number: 12191316.4
(22) Date of filing: 05.11.2012
(51) Int. Cl.: H01M 2/02, H01M 2/10

(54) **Battery with sidewall ribs**
Batterie mit Seitenwandrippen
Batterie avec nervures de paroi latérale

(30) Priority: 14.11.2011 ES 201131177 U
(43) Date of publication of application: 15.05.2013
(73) Proprietor: Exide Technologies S.A.U., 19200 Azuqueca (Guadalajara) (ES)
(72) Inventor: Collado Parra, Ernesto, 19200 Azuqueca (Guadalajara) (ES); Gutiérrez Heredia, Jesús, 19200 Azuqueca (Guadalajara) (ES); Alonso, Federico, 19200 Azuqueca (Guadalajara) (ES)
(74) Representative: Elzaburu Marquez, Alberto

(56) References cited:
- EP-A2- 1 515 379
- GB-A- 2 080 722
- US-A- 1 888 890
- US-A- 3 388 007
- US-A- 4 384 031

## Description

### FIELD OF THE INVENTION

The present disclosure relates generally to batteries, particularly to batteries with containers having vertical ribs.

### BACKGROUND OF THE INVENTION

Monobloc containers for lead-acid batteries are conventionally produced in several types. For any given battery type, the capacity of the battery can vary. Due to cost considerations, only a limited number battery types are offered. The result has been that only a few standardized outside dimensions are available with widely differing capacities for any given container type. This is achieved by varying the number of positive and negative plates within each compartment of the container, which leads to corresponding variations in the cell space. These free spaces are conventionally filled with filler pieces referred to as plug-in separators.

Another approach for reducing the free spaces in battery containers is to provide the intermediate and side walls with vertical ribs. Document US 1888890 discloses a battery container with vertical ribs. The vertical ribs serve as spacers, while at the same time acting to stiffen the walls. However, since these ribs are molded from the same material that typically is used to form the battery housing, the ribs too are stiff. The current rib designs have resulted in damage to separators, which can cause short circuits.

Accordingly, a continual need exists for batteries with improved rib designs.

### SUMMARY OF THE INVENTION

Disclosed herein are batteries with improved rib designs.

In one embodiment, a battery container comprises a bottom and container walls comprising end walls and partitions for defining container compartments for receiving plate groups of the battery; a plurality of ribs formed on the end walls and the partitions that extend into the container compartments for engaging an adjoining plate group; and wherein the ribs comprise a first edge that is formed on the container walls and a second edge opposing the first edge and a transition section defined between the first edge and the second edge, wherein the first edge has a first edge height and a first edge width and the second edge has a second edge height and a second edge width, and wherein the second edge width progressively expands proximate the bottom of the container.

The above-described and other features will be appreciated and understood by those skilled in the art from the following detailed description, drawing, and appended claims.

### BRIEF DESCRIPTION OF THE DRAWINGS

Referring now to the figures, which are exemplary embodiments, and wherein like elements are numbered alike:
Figure 1 is a partial perspective view of an exemplary embodiment of a battery container;
Figure 2 is a partial top view of the exemplary embodiment of Figure 1; and
Figure 3 is a partially cross sectional side view of the embodiment of Figure 1.

### DETAILED DESCRIPTION OF THE INVENTION

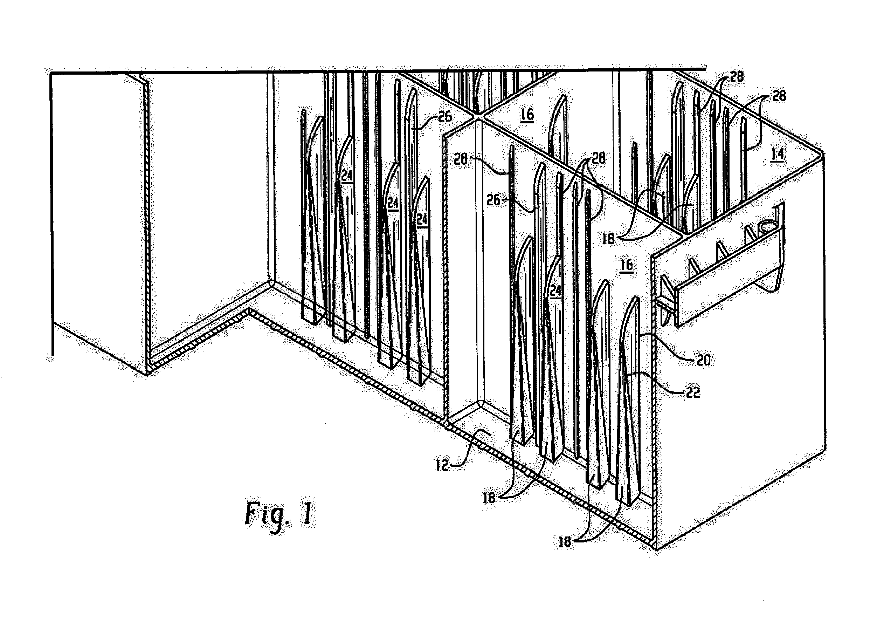

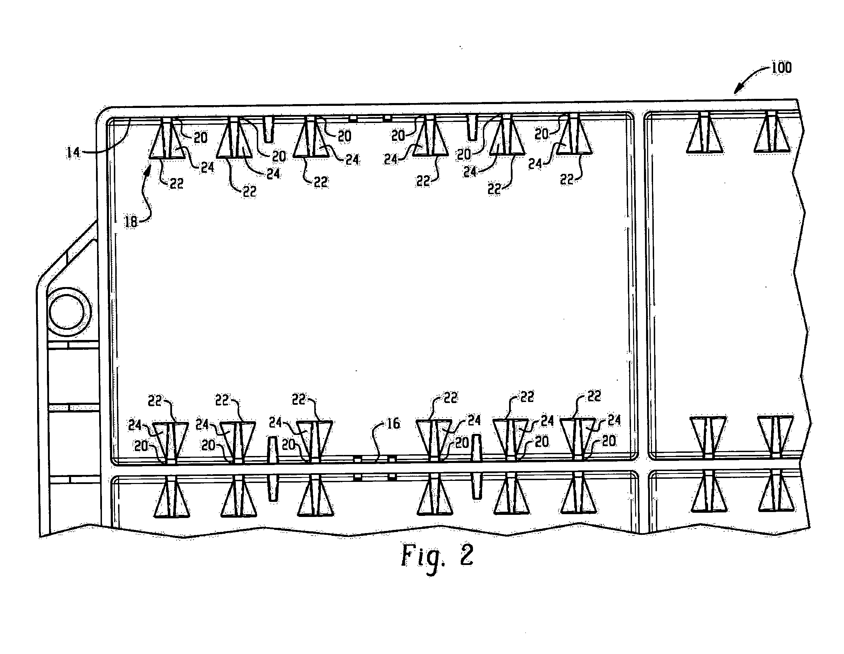

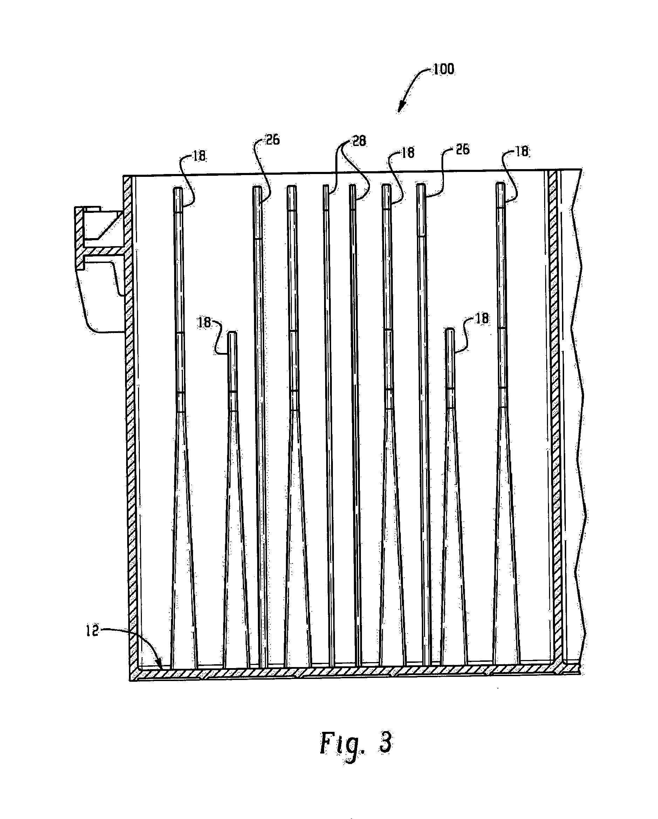

Figures 1-3 illustrate a battery container generally designated 100. The material for the container 100 is selected to be tolerant to the acidic environment typically found in a lead-acid battery. Suitable materials include, but are not limited to, polymeric materials such as polyethylene, polypropylene, and the like. The size and shape of the container 100 can vary depending on the battery type, as is readily understood by a person skilled in the art.

The container 100 comprises a bottom 12, end walls 14 and partitions 16 that are joined together to define container compartments for receiving plate groups (not shown) of the battery. The number, size and relative dimension of each compartment can vary depending on the battery type. For example, the number of plate ribs 18 can correspond to the number of plates in the battery. A plurality of plate ribs 18 formed on the end walls 14 and the partitions 16 extend into the container compartments for engaging an adjoining plate group. Specifically, each rib is joined to the bottom 12 of the container 100 and extends vertically along the walls 14 or partitions 16.

The plate ribs 18 can be separate and apart from structural ribs 28 or can form a portion of the structural ribs 28. Additionally, optional secondary ribs 26, different than plate ribs 18 and structural ribs 28, can be added primarily for spacing of battery strapping material. Again, the plate ribs 18 can be separate and apart from secondary ribs 26 or can form a portion of the secondary ribs 26. The height of the ribs 26 and 28 typically extends the complete height of the end walls 14 and partitions 16, whereas the plate ribs 18 typically have a height less than the height of the end walls 14 and partitions 16.

Each rib of the plurality of plate ribs 18 comprises a first edge 20 that is formed on the container walls 14 or partition 16 and a second edge 22 opposing the first edge 20 and a transition section 24 defined between the first edge 20 and the second edge 22. The first edge 20 height is greater than the second edge 22 height for at least some portion of the ribs 18. The transition section 24 is rounded from a top of the first edge 20 to a top of the second edge 22, wherein the top of the first edge and the top of the second edge 22 is defined as the portion of each edge opposite the bottom 12 of the container 100. A portion of the transition section 24 in contact with the bottom 18 tapers from the second edge 22 to the first edge 20. Further, at least a portion of the width of the transition section 24 progressively widens from a top portion of the second edge 20 toward the bottom 18 of the container 100. The transition section 24 has a first portion that has a uniform width and a second potion having a first transition section width proximate the second edge 22 and a second transition width proximate the first edge 20. The first transition section width is greater than the second transition width.

Further, the second edge 22 width progressively expands proximate the bottom 12 of the container 100. This plate rib design 18 provides a rib design that is reinforced proximate the bottom 12 of the container 100. Since plate separators are easily broken on the bottom, this design advantageously provides a greater surface area in contact with the bottom of the separator to help prevent breakage of the separator. Further, this design enables a distribution of compression forces. The pressure that is applied to the plate is not located only in the contact area but is distributed over the entire surface area of the rib. As such, a greater compression force can be applied if needed compared to designs not having this progressively broadening rib width.

While the invention has been described with reference to an exemplary embodiment, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A battery container (100) comprising:
a bottom (12) and container walls comprising end walls (14) and partitions (16) for defining container compartments for receiving plate groups of the battery;
a plurality of ribs (18) formed on the end walls (14) and the partitions (16) that extend into the container compartments for engaging an adjoining plate group;
wherein the ribs (18) comprise a first edge (20) that is formed on the container walls (14) or the partitions (16) and a second edge (22) opposing the first edge (20) and a transition section (24) defined between the first edge (20) and the second edge (22), wherein the first edge (20) has a first edge height and a first edge width and the second edge (22) has a second edge (22) height and a second edge (22) width, and wherein the second edge (22) width progressively expands proximate the bottom (12) of the container (100), **characterised in that** a portion of the transition section (24) in contact with the bottom (100) tapers from the second edge (22) to the first edge (20).

2. The battery container according to Claim 1, wherein the first edge (20) height is greater than the second edge (22) height.

3. The battery container according to Claim 2, wherein the transition section (24) is rounded from a top of the first edge (20) to a top of the second edge (22), wherein the top of the first edge (20) and the top of the second edge (22) is defined as the portion of each edge opposite the bottom (12) of the container (100).

4. The battery container according to any one of the Claims 1 to 3, wherein at least a portion of the width of the transition section (24) progressively widens from a top portion of the second edge (22) toward the bottom (12) of the container (100), wherein the top portion is defined as the portion of the edge opposite the bottom (12) of the container (100).

5. The battery container (100) according to any one of the Claims 1 to 4, wherein the transition section (24) has a first portion that has a uniform width and a second portion having a first transition section width proximate the second edge (22) and a second transition width proximate the first edge (20).

6. The battery container according to Claim 5, wherein the first transition section width is greater than the second transition width.

## Patentansprüche

1. Ein Batteriebehälter (100), der Folgendes umfasst:
einen Boden (12) und Behälterwände, die Endwände (14) und Trennwände (16) zur Definierung von Behälterfächern zur Aufnahme der Plattengruppen der Batterie umfassen,
eine Vielzahl von Rippen (18), die an den Endwänden (14) und den Trennwänden (16) gebildet sind und sich in die Behälterfächer erstrecken, um eine angrenzende Plattengruppe einzurasten;
wobei die Rippen (18) eine erste Kante (20), die an den Behälterwänden (14) oder den Trennwänden (16) gebildet ist, und eine zweite Kante (22) gegenüber der ersten Kante (20) und einen Übergangsabschnitt (24) umfassen, der zwischen der ersten Kante (20) und der zweiten Kante (22) gebildet ist, wobei die erste Kante (20) eine erste Kantenhöhe und eine erste Kantenbreite und die zweite Kante (22) eine Höhe der zweiten Kante (22) und eine Breite der zweiten Kante (22) besitzt und wobei die Breite der zweiten Kante (22) sich in der Nähe des Bodens (12) des Behälters (100) progressiv erweitert, **dadurch gekennzeichnet, dass** ein Teil des Übergangsabschnitts (24) in Kontakt mit dem Boden (100) sich von der zweiten Kante (22) zur ersten Kante (20) konisch verjüngt.

2. Der Batteriebehälter nach Anspruch 1, bei dem die Höhe der ersten Kante (20) größer als die Höhe der zweiten Kante (22) ist.

3. Der Batteriebehälter nach Anspruch 2, bei dem der Übergangsabschnitt (24) von einer Oberseite der ersten Kante (20) zu einer Oberseite der zweiten Kante (22) abgerundet ist, wobei die Oberseite der ersten Kante (20) und die Oberseite der zweiten Kante (22) als der Teil jeder Kante gegenüber dem Boden (12) des Behälters (100) definiert ist.

4. Der Batteriebehälter nach einem der Ansprüche 1 bis 3, bei dem mindestens ein Teil der Breite des Übergangsabschnitts (24) sich von einem oberen Teil der zweiten Kante (22) in Richtung des Bodens (12) des Behälters (100) progressiv erweitert, wobei der obere Teil als der Teil der Kante gegenüber dem Boden (12) des Behälters (100) definiert ist.

5. Der Batteriebehälter (100) nach einem der Ansprüche 1 bis 4, bei dem der Übergangsabschnitt (24) einen ersten Teil mit einer gleichmäßigen Breite und einen zweiten Teil besitzt, der eine erste Übergangsabschnittsbreite in der Nähe der zweiten Kante (22) und eine zweite Übergangsabschnittsbreite in der Nähe der ersten Kante (20) besitzt.

6. Der Batteriebehälter nach Anspruch 5, bei dem die erste Übergangsabschnittsbreite größer als die zweite Übergangsabschnittsbreite ist.

## Revendications

1. Un coffre à batterie (100) comprenant :
un fond (12) et des parois de coffre comprenant des parois d'extrémités (14) et des cloisons (16) pour définir des compartiments de coffre destinés à recevoir des groupes de plaques de la batterie ;
une pluralité de nervures (18) formées sur les parois d'extrémités (14) et les cloisons (16) qui s'étendent à l'intérieur des compartiments du coffre pour l'enclenchement à un groupe de plaques adjacentes ;
dans lequel les nervures (18) comprennent un premier bord (20) qui est formé sur les parois (14) du coffre ou les cloisons (16) et un second bord (22) faisant face au premier bord (20) et une section de transition (24) définie entre le premier bord (20) et le second bord (22), dans lequel le premier bord (20) possède une première hauteur de bord et une première largeur de bord et le second bord (22) possède une seconde hauteur de bord (22) et une seconde largeur de bord (22), et dans lequel la seconde largeur de bord (22) augmente progressivement près du fond (12) du coffre (100), **caractérisé en ce qu'**une portion de la section de transition (24) en contact avec le fond (100) diminue depuis le second bord (22) jusqu'au premier bord (20).

2. Le coffre de batterie selon la revendication 1, dans lequel la hauteur du premier bord (20) est supérieure à la hauteur du second bord (22).

3. Le coffre de batterie selon la revendication 2, dans lequel la section de transition (24) est arrondie depuis un sommet du premier bord (20) jusqu'à un sommet du second bord (22), dans lequel le sommet du premier bord (20) et le sommet du second bord (22) est défini comme la portion de chaque bord en face du fond (12) du coffre (100).

4. Le coffre de batterie selon n'importe laquelle des revendications 1 à 3, dans lequel au moins une portion de la largeur de la section de transition (24) s'élargit progressivement depuis une portion supérieure du second bord (22) en direction du fond (12) du coffre (100), dans lequel la portion supérieure est définie comme la portion du bord en face du fond (12) du coffre (100).

5. Le coffre de batterie (100) selon n'importe laquelle des revendications 1 à 4, dans lequel la section de transition (24) possède une première portion ayant une largeur uniforme et une seconde portion ayant une première largeur de section de transition près du second bord (22) et une seconde largeur de transition près du premier bord (20).

6. Le coffre de batterie selon la revendication 5, dans lequel la première largeur de section de transition est supérieure à la seconde largeur de transition.
